# EUROPÄISCHE PATENTANMELDUNG

(11) **EP 1 312 256 A2**
(43) Veröffentlichungstag der Anmeldung: **21.05.2003**
(21) Anmeldenummer: 02025808.3
(22) Anmeldetag: 18.11.2002
(51) Int. Cl.: A01J 5/007

(54) **Verfahren und Vorrichtung zur Verbesserung eines Melkvakuums an einer Zitze eines zu melkenden Tieres**

(30) Priorität: 16.11.2001 DE 10156451
(71) Anmelder: Westfalia Landtechnik GmbH, 59302 Oelde (DE)
(72) Erfinder: Meier, Hans-Dieter, 59302 Oelde (DE)
(74) Vertreter: Neumann, Ditmar

(57) **Zusammenfassung**

Der Gegenstand der Erfindung bezieht sich auf eine Melkvorrichtung mit Melkbechern (1), die über wenigstens einen Melkschlauch (4) mit mindestens einer Melkleitung (47) verbunden sind, wobei das an einer sich im Melkbecher (1) befindenden Zitze anliegende Vakuum an ein Steuervakuum angepasst wird, indem der Strömungsquerschnitt des Melkschlauchs (4) örtliches verändert wird. Dazu erfolgt ein Vergleich von Steuer- und Melkvakuum.

## Beschreibung

Die vorliegende Erfindung bezieht sich auf ein Verfahren und eine Vorrichtung zur Verbesserung eines Melkvakuums an einer Zitze eines zu melkenden Tieres, insbesondere einer Kuh.

Für die Auslegung einer Melkvorrichtung nach DIN/ISO 1350 soll das an der Zitzenspitze eines zu melkenden Tieres herrschende Vakuum als Grundlage für sämtliche relevanten Vakua der Melkvorrichtung sein. Es hat sich herausgestellt, dass ein mittleres Melkvakuum an der Zitze, welches zwischen z. B. 32 kPa und 40 kPa beträgt, während der Zeit des höchsten Milchflusses einen guten Kompromiss darstellt, um ein Tier schnell, schonend und vollständig zu melken.

Das Betriebsvakuum wird daher, in klassischen Melkanlagen auf der Grundlage des höchsten zu erwartenden Milchflusses eingestellt. Die an einer Zitze wirksame Vakuum-Höhe unterscheidet sich während eines Melkvorgangs mehr oder weniger stark von dem am Vakuumregelventil eingestellten Betriebsvakuum. Diese Differenz ist im Regelfall umso größer, je höher der aktuelle Milchfluss im Melkzeug ist. Dies bedeutet, dass zum Melkbeginn bzw. zum Melkende hin, wenn folglich lediglich ein geringer Milchfluss vorhanden ist, ein höheres Vakuum auf die Zitzenspitze wirkt, als beim maximalen Milchfluss. Dieses höhere Vakuum geht einher mit einigen Nachteilen, die eine negative Auswirkung auf die Melkleistung bis hin zur Beeinträchtigung der Eutergesundheit eines Tieres haben können.

In Abhängigkeit vom Ausmelkgrad lässt der Euterinnendruck nach. Bei klassischen Melkanlagen kommt es daher in der Regel zu dem bekannten Klettern der Melkzeuge. Durch das Klettern des Melkbechers kommt es zu einer falschen Positionierung desselbigen, die zu einer Irritation im Bereich des Fürstenbergschen Venenrings führen kann. Als Folge der Irritation sind Störungen im Bereich der milchableitenden Wege im Euter und damit eine geringere Milchflussintensität und ein höheres Nachgemelk bekannt.

Durch die DE 196 30 146 A1 wird eine Vorrichtung zur automatischen Milchaussonderung beim maschinellen Melken beschrieben. Diese Vorrichtung hat eine Messeinrichtung zum Ermitteln von Parameterwerten des Milchstroms. Des weiteren weist die Vorrichtung eine Wegeventileinrichtung zum wahlweisen Leiten des Milchstroms in einen von mehreren Leitungswegen sowie eine zur Aussonderung von Milch basierend auf den ermittelten Parameterwerten auf die Wegeventileinrichtung einwirkende Steuereinrichtung auf. Die Wegeventileinrichtung weist ein Gehäuse mit einem Milcheingang und mehreren Milchausgängen sowie eine Verschlusseinrichtung zur wahlweisen Absperrung der Milchausgänge auf. In dem Gehäuse der Wegeventileinrichtung ist eine über wenigstens eine Öffnung mit dem Gehäuseinneren in Fluidverbindung stehende Messkammer einer Sensoreinrichtung für die Erfassung von Parameterwerten angeordnet.

In Verbindung mit einem Milchflusssensor ist es bei einer Vorrichtung nach dem Vorschlag der DE 196 30 146 A1 möglich, das am Euter anliegende Vakuum zu steuern und insbesondere konstant zu halten. Eine solche Konstanthaltung wäre dadurch möglich, dass der Absperrschieber einen zum Ablauf gewählten Milchausgang noch teilweise abdeckt und über den Grad der teilweisen Abdeckung der Unterdruck an der Zitze reguliert wird. Durch diese Maßnahme soll das Klettern des Melkbechers verzögert werden.

Neben dem Klettern der Melkbecher besteht die Problematik, dass bei einem sehr hohen Milchfluss oder durch einen Milchpfropfen im Milchschlauch das Vakuum an der Zitze derart abgesenkt wird, dass die von der Zitze kommende Milch nicht ausreichend schnell abtransportiert wird. Dies kann im Extremfall zum Zusammenbruch des Vakuums an der Zitze führen, wodurch ein Abfallen des Melkbechers auftreten kann.

Durch die WO 01/19169 A1 ist eine Melkvorrichtung mit Melkbechern bekannt. Die Melkbecher sind einzeln über Melkschläuche mit einer Milchleitung verbunden. Jeder Melkschlauch weist einen Durchflussmesser auf, durch den der Milchfluss ermittelt wird. Des weiteren ist eine Vakuum-Regeleinheit vorgesehen, durch die das Vakuum im Melkschlauch variiert werden kann. Die Höhe des Vakuums ist abhängig von der Größe des Milchflusses. Hierbei wird von einem Grundvakuum ausgegangen, das mit steigendem Milchfluss zunimmt. Hierdurch soll der Abtransport der Milch beschleunigt werden.

Durch die DE 196 14 376 A1 ist ein Verfahren bekannt geworden, bei dem der Druck im Milchsammelstück mit einem Druckmessgerät gemessen wird. Das Drucksignal wird in ein elektrisches Signal umgewandelt. Mit einer Steuereinrichtung wird das gemessene Signal mit einem vorgegebenen Vergleichswert verglichen. In Abhängigkeit von dem gemessenen Signal stellt eine Druckeinstelleinrichtung den Druck auf ein Steuerventil ein, um das an der Zitze anliegende Vakuum einzustellen. Nachteilig daran ist der hohe apparative Aufwand, der hohe Kosten verursacht.

Der vorliegenden Erfindung liegt die Zielsetzung zugrunde, ein Verfahren und eine Melkvorrichtung anzugeben, durch das beziehungsweise die eine Verbesserung des Melkvakuums an einer Zitze eines zu melkenden Tieres unabhängig von der Größe des Milchflusses erreicht wird.

Diese Zielsetzung wird durch das erfindungsgemäße Verfahren mit den Merkmalen des Anspruchs 1 beziehungsweise durch die erfindungsgemäße Melkvorrichtung mit den Merkmalen des Anspruchs 13 erreicht. Vorteilhafte Weiterbildungen und Ausgestaltungen des Verfahrens beziehungsweise der Melkvorrichtung sind Gegenstand der jeweiligen abhängigen Ansprüche.

Der Erfindung liegt die prinzipielle Überlegung zugrunde, dass unabhängig vom aktuellen Milchfluss an der Zitze im wesentlichen immer ein geeignetes Melkvakuum anliegt. Dazu ist ein Steuervakuum vorgesehen, auf dessen Vakuumhöhe das Melkvakuum eingestellt wird. Außerdem ist erfindungsgemäß ein derartiges Betriebsvakuum vorgesehen, dass zum Abtransport der Milch stets, d.h. auch bei einem hohem Milchfluss, ein ausreichendes Druckgefälle in der Milchleitung vorliegt. Dadurch wird gewährleistet, dass bei hohem Milchfluss oder bei z.B. Vorliegen eines Milchpfropfens im Milchschlauch ein Abfallen eines Melkbechers verhindert und die Milch schnell genug abtransportiert wird.

Andererseits wird durch die Erfindung erreicht, dass der Fürstenbergsche Venenring durch Hochklettern eines Melkbechers im wesentlichen nicht beeinflusst wird, da in jeder Melkphase ein passendes Melkvakuum bereitgestellt wird.

Die Erfindung hat erhebliche Vorteile.

Im Stand der Technik wurde das an der Zitze anliegende Melkvakuum in der Regel an den maximal zu erwartenden Milchfluss angepasst, um einen ausreichend schnellen Abtransport der Milch sicherzustellen, und um ein Abfallen der Melkbecher bei hohem Milchfluss zu verhindern.

In Melkanlagen stellen die Milchleitungen einen Strömungswiderstand dar und bewirken einen Druckabfall. Bei hohen Milchflüssen stellt die fließende Milch selbst, durch Querschnittsverengung und Milchpfropfe bedingt, ein weiteres erhebliches Strömungshindernis dar, das einen großen Druckabfall bewirkt.

Deshalb nimmt in konventionellen Melkanlagen das an der Zitze anliegende Melkvakuum bei hohen Milchflüssen ab, da die fließende Milch einen erheblichen Beitrag zu dem Gesamtwiderstand beiträgt, so dass das Melkvakuum an der Zitze stark abnehmen kann. Um ein auch für derartige Fälle noch ausreichend hohes Melkvakuum zur Verfügung zu stellen, so dass in dem Melkbecher auch bei hohem Milchfluss noch ein ausreichendes Melkvakuum vorliegt, muss in solchen konventionellen Anlagen deshalb das Betriebsvakuum entsprechend hoch gewählt werden.

Je nach vorliegenden Betriebsbedingungen stellt sich dann ein daraus resultierendes Melkvakuum ein, welches bei geringen Milchflüssen z.B. zu Beginn und am Ende des Melkens deutlich höher ist als zum Melken erforderlich. Zur Lösung ist es im Stand der Technik vorgeschlagen worden, das Vakuum an der Zitze zu messen und in Abhängigkeit von dem Milchfluss einzustellen. Dazu sind bei den bekannten Vorrichtungen allerdings aufwändige und teure Mess- und Steuergeräte erforderlich.

Im Gegensatz dazu wird erfindungsgemäß ein Steuervakuum zur Verfügung gestellt, womit das Melkvakuum an der Zitze gesteuert wird. Damit liegen bei einer erfindungsgemäßen Anlage in der Regel zwei verschiedene Vakuumhöhen vor, nämlich das Betriebsvakuum einerseits und das Steuer- und das Melkvakuum andererseits.

Das Melkvakuum wird durch das Steuervakuum gesteuert und entspricht im wesentlichem dem Steuervakuum, wobei sich zeitliche Abweichungen oder Abweichungen durch die Regelgenauigkeit ergeben können (z.B. hysteresartige Abweichungen).

Das Steuervakuum wird auf den gewünschten Unterdruck eingestellt, der z.B. 35 kPa betragen kann. Das Steuervakuum stellt das Melkvakuum direkt ohne Zwischenschaltung von aufwändigen Drucksensoren, elektrischen Mess- und Vergleichs- und Ventileinstelleinrichtungen usw. ein, indem ein vorzugsweise mechanischer Druckvergleich durchgeführt wird. Je nach Differenz der Drücke wird das Melkvakuum vergrößert oder verkleinert und auf die Höhe von hier z.B. 35 kPa angepasst. Das Betriebsvakuum in der Milchleitung hingegen beträgt z.B. 50 kPa. Es ergibt sich in diesem Beispiel eine Differenz von 15 kPa zum Abtransport der ermolkenen Milch, die in der Regel auch bei hohen und sehr hohen Milchflüssen zum Abtransport ausreicht.

Das Melkvakuum muss nicht mit dem Steuervakuum übereinstimmen, sondern kann auch davon abweichen. Dann gibt es in der Melkanlage wenigstens drei Vakuumniveaus, nämlich das Betriebs-, das Nenn- und das Melkvakuum. Allerdings sollte sich durch Einstellung eines bestimmten Steuervakuums ein bestimmtes Melkvakuum ergeben. Das Melkvakuum ist im wesentlichen unabhängig vom Milchfluss. Das Betriebsvakuum ist im Normalfall das größte Vakuum. Aus diesem Vakuum werden vorzugsweise die weiteren Vakua durch geeignete Drosselung generiert. In der Regel ist das Steuervakuum etwa genauso groß wie das Melkvakuum. Es kann auch etwas größer sein, um die konstruktiven Gegebenheiten zu berücksichtigen (Druckabfall zur Steuerung etc.).

Unter dem Begriff Melkvakuum wird im Sinne dieser Anmeldung das Vakuum verstanden, welches charakteristisch für das Vakuum ist, welches im Melkbecher an der Zitze oder benachbart zum Melkbecher vorliegt. Dabei kann es sich um das effektiv anliegende Vakuum handeln oder um ein Kennwert, der z.B. proportional zum Vakuum im Melkbecher ist. Damit sind auch Vakuumwerte erfasst, die im Milchschlauch vorliegen.

In einer Weiterbildung erfolgt der Druckvergleich an einem elastischen Körper. Ist das Melkvakuum zu groß, so verändert wenigstens ein Teil des elastischen Körpers seine Lage derart, dass eine Verringerung des Melkvakuums bewirkt wird, bis das Melkvakuum den gewünschten Wert erreicht hat. Ist umgekehrt das Melkvakuum zu gering, so verändert wenigstens ein Teil des elastischen Körpers seine Lage derart, dass eine Vergrößerung des Melkvakuums bewirkt wird, bis das Melkvakuum den gewünschten Wert erreicht hat.

Vorzugsweise wird der Strömungswiderstand in der Melkleitung durch die Differenz von Melk- und Steuervakuum beeinflusst, wobei ein zu geringes Melkvakuum eine Verringerung des Strömungswiderstandes und ein zu großes Melkvakuum eine Vergrößerung des Strömungswiderstandes bewirkt. Die Veränderung des Strömungswiderstandes erfolgt so lang, bis das Melkvakuum den von dem Steuervakuum vorgegebenen Wert erreicht hat.

Die an der Zitze wirksame Melkvakuum-Höhe unterscheidet sich deshalb in der Regel von dem eingestellten Betriebsvakuum. Der Unterschied hängt direkt von dem eingestellten Steuervakuum ab. Das Melkvakuum hängt gemäß dieser Ausgestaltung nicht von dem Melkverlauf ab. Sowohl zu Melkbeginn als auch zu Melkende herrscht jeweils das gleiche Melkvakuum bzw. das eingestellte Steuervakuum.

Die Höhe des Steuervakuums und damit auch die des Melkvakuums ist in weiten Grenzen einstellbar. So kann das Steuervakuum z.B. auf Werte zwischen 5 und 80 kPa bei z.B. Kühen eingestellt werden. Vorzugsweise werden bei Kühen Werte zwischen 20 und etwa 60 kPa und besonders bevorzugt Werte zwischen 25 und 45 kPa eingestellt. Werte zwischen etwa 30 und etwa 40 kPa reichen bei Kühen im allgemeinen aus, um ein effektives Melken zu erzielen.

Es sei an dieser Stelle aber darauf hingewiesen, dass sowohl höhere als auch geringere Vakua möglich sind. Die Erfindung eignet sich im übrigen nicht nur zum Melken von Kühen, sondern auch zum Melken von anderen milchabgebenden Säugetieren und insbesondere auch zum Melken von Kühen, Schafen, Ziegen, Kamelen, Büffeln, Lamas, Eseln und dergleichen mehr.

Die Einstellung des Melkvakuums über ein Steuervakuum bedeutet, dass über die gesamte Melkdauer von dem Melkbeginn über die Hauptmelkphase bis zum Melkende hin, ein Melkvakuum an der Zitze anliegt, welches zum Melken gut geeignet ist. In der An- und Nachmelkphase, wenn nur ein geringer Milchfluss vorhanden ist, liegt das relativ geringe Melkvakuum ebenso an wie in der Hauptmelkphase. In jeder Melkphase wird der Abtransport der ermolkenen Milch durch den Unterschied zwischen Melk- und Betriebsvakuum zuverlässig bewirkt. Zur Verbesserung eines an einer sich im Melkbecher befindenden Zitze liegenden Melkvakuums, wobei der Melkbecher über einen Melkschlauch mit mindestens einer Milchleitung verbunden ist, wird erfindungsgemäß vorgeschlagen, dass das Melkvakuum oder eine zum Vakuum proportionale Kenngröße im Melkbecher oder benachbart zum Melkbecher durch das Steuervakuum gesteuert wird.

Das aktuelle Vakuum oder eine zum aktuellen Vakuum proportionale Kenngröße wird mit dem vorgegebenen Steuervakuum verglichen. In Abhängigkeit vom Ergebnis des Vergleichs erfolgt eine örtliche Veränderung des freien Strömungsquerschnittes des Melkschlauchs. Hierdurch wird erreicht, dass das an der Zitze anliegende Melkvakuum im wesentlichen konstant ist und mit dem Steuervakuum korreliert.

Zur Vermeidung hoher Vakua an der Zitze eines zu melkenden Tieres, liegt während der gesamten Melkdauer, also während der Hauptmelkphase und insbesondere auch während der Anmelkphase und auch der Ausmelkphase nicht das volle Betriebsvakuum, sondern nur ein niedrigeres Steuervakuum an. Hierdurch wird in diesen Phasen vermieden, dass eine Zitze zu tief in den Melkbecher eingesaugt und so der Fürstenbergsche Venenring abgeschnürt wird.

Gemäß einer vorteilhaften Weiterbildung des Verfahrens wird vorgeschlagen, dass die Steuerung des Melkvakuums oder einer zum Vakuum proportionalen Kenngröße kontinuierlich erfolgt. Die kontinuierliche Steuerung des Melkvakuums oder einer zum Vakuum proportionalen Kenngröße hat den Vorteil, dass das an der Zitze anliegende Melkvakuum nahezu konstant ist, da in Abhängigkeit vom Ergebnis eines Vergleichs die örtliche Änderung des freien Strömungsquerschnittes des Melkschlauchs entsprechend erfolgt.

Da die Steuerung des Melkvakuums oder einer zum Vakuum proportionalen Kenngröße und der Vergleich des aktuellen Vakuums oder einer zum Vakuum proportionalen Kenngröße erfindungsgemäß in der Regel relativ einfach ist, wird das Melkvakuum bevorzugt kontinuierlich gesteuert. Wenn im Einzelfall eine kontinuierliche Steuerung mit einem nicht unerheblichen apparativen Aufwand durchgeführt werden muss, kann es unter ökonomischen und/oder melktechnischen Aspekten zweckmäßig sein, die Steuerung des Vakuums oder einer zum Vakuum proportionalen Kenngröße diskontinuierlich durchzuführen. Die zeitlichen Abstände, in denen die Steuerung des Vakuums oder einer zum Vakuum proportionalen Kenngröße im Melkbecher oder benachbart zum Melkbecher erfolgt, ist dabei vorzugsweise so bemessen, dass sichergestellt ist, dass die Zitze nicht über einen längeren Zeitraum einem zu hohen Vakuum ausgesetzt wird.

Im Fall der kontinuierlichen und auch der diskontinuierlichen Steuerung ist es bevorzugt, dass die Regelung mit einer Dämpfung versehen ist, um Schwingungen zu dämpfen und ein wesentliches Überschwingen zu verhindern. Das ist z.B. über Öldämpfelemente oder Federelemente oder dergleichen möglich.

Gemäß einer weiteren vorteilhaften Ausgestaltung des Verfahrens wird vorgeschlagen, dass der freie Strömungsquerschnitt des Melkschlauchs bei einem vorgegebenen Melk- und Steuervakuum im Melkbecher einen vorgegebenen Strömungsquerschnitt hat. Der Strömungsquerschnitt wird in Abhängigkeit vom Ergebnis des Vergleichs vergrößert oder verkleinert. Das Steuervakuum und der Strömungsquerschnitt kann viertelindividuell oder tierindividuell eingestellt sein, wobei tierindividuelle Parameter, wie z. B. Melkbarkeit/Laktationsstand des Tieres berücksichtigt werden können.

Gemäß einer vorteilhaften Ausgestaltung des Verfahrens wird vorgeschlagen, dass die örtliche Veränderung des freien Strömungsquerschnittes des Melkschlauchs dadurch erreicht wird, dass eine im wesentlichen radial einwärts gerichtete Kraft auf einen elastischen Abschnitt des Melkschlauchs einwirkt, wobei die Größe der Kraft vom Ergebnis des Vergleichs abhängig ist. Bei einer solchen Verfahrensführung bedarf es keiner Einbauten im Melkschlauch. Eine nachträgliche Ausrüstung einer Melkvorrichtung ist möglich.

Gemäß einer noch weiteren vorteilhaften Weiterbildung des Verfahrens wird vorgeschlagen, dass der Abschnitt von einem Gehäuse umgeben ist, wobei zwischen dem Gehäuse und dem Abschnitt eine Kammer ausgebildet ist, die mit Steuerdruck beaufschlagt wird. In Abhängigkeit von dem Unterschied zwischen Steuervakuum und aktuellem Melkvakuum wird der Strömungsquerschnitt entsprechend verändert, so dass das Melkvakuum wieder im wesentlichen dem Steuervakuum entspricht bzw. damit korreliert.

Nach einer weiteren vorteilhaften Ausbildung des Verfahrens wird vorgeschlagen, dass der elastische Abschnitt des Melkschlauchs von einem Gehäuse umgeben ist, wobei zwischen dem Gehäuse und dem Abschnitt eine Kammer ausgebildet ist, die vorzugsweise mit dem Steuerdruck beaufschlagt wird. Diese vorteilhafte Weiterbildung des Verfahrens ermöglicht eine Realisierung desselbigen, ohne dass bewegliche mechanische Teile notwendig sind.

Alternativ hierzu wird eine Weiterbildung des Verfahrens vorgeschlagen, bei dem der freie Strömungsquerschnitt durch einen lageveränderlichen Körper verändert wird, der wenigstens teilweise in dem Melkschlauch angeordnet ist. Der Körper bildet innerhalb des Melkschlauchs einen Strömungswiderstand, durch den das Vakuum der Zitze beeinflusst werden kann. Die Position des lageveränderlichen Körpers ergibt sich im wesentlichen in Abhängigkeit von dem Milchfluss bei ausgeglichenen Druckverhältnissen von Steuer- und Melkdruck.

Bei kleinen Milchflüssen ist der Druckverlust in der Milchleitung relativ gering. Dann ist der lageveränderliche Körper derart positioniert, dass er eine relativ große Querschnittsverengung und damit einen relativ hohen Druckverlust bewirkt, um das Melkvakuum an die Höhe des Steuervakuums anzupassen.

Bei großen Milchflüssen ist der Druckverlust in der Milchleitung relativ groß. Dann ist der lageveränderliche Körper derart positioniert, dass er nur eine relativ geringe Querschnittsverengung und damit einen relativ geringen Druckverlust bewirkt, um das Melkvakuum an die Höhe des Steuervakuums anzupassen.

Der Körper kann axial bewegbar sein. Er kann auch radial ein- oder auswärts bewegbar, um eine Verkleinerung oder eine Vergrößerung des freien Strömungsquerschnittes zu erreichen. Statt eines radial ein- oder auswärts bewegbaren Körpers wird nach einer weiteren vorteilhaften Weiterbildung des Verfahrens vorgeschlagen, dass der Körper um eine in der Ebene des freien Strömungsquerschnittes liegende Achse verschwenkt wird.

Möglich ist auch, dass die Lageveränderung durch eine Antriebseinheit und vorzugsweise durch eine elektromotorische Antriebseinheit bewirkt wird.

Nach einer noch weiteren vorteilhaften Weiterbildung des Verfahrens wird vorgeschlagen, dass der Körper mit einer auslenkbaren Membrane verbunden ist, die teilweise eine Kammer begrenzt, wobei die Kammer mit dem Steuerdruck beaufschlagt wird.

Die Verwendung einer Membran oder dergleichen ist bei mehreren der zuvor beschriebenen Weiterbildungen besonders bevorzugt.

Die erfindungsgemäße Melkvorrichtung weist wenigstens einen Melkbecher auf, der durch einen Melkschlauch mit mindestens einer Milchleitung verbunden ist. Das an einer sich im Melkbecher befindenden Zitze anliegende Melkvakuum wird durch ein Steuervakuum gesteuert. Der Unterschied zwischen Steuervakuum und Melkvakuum bewirkt eine örtliche Veränderung des Strömungsquerschnittes im Melkschlauch, um so das Melkvakuum an das vorgegebene Steuervakuum anzupassen.

In einer bevorzugten Weiterbildung erfolgt die Anpassung des freien Strömungsquerschnittes als Funktion des Steuervakuums, des aktuellen Melkvakuums, des Milchflusses und der weiteren Parameter, die Strömungswiderstände und Druckverluste im System beeinflussen. Vorzugsweise werden die einzelnen Parameter nicht separat gemessen, sondern wirken implizit auf die Vorrichtung derart ein, dass sich ein Melkvakuum etwa in Höhe des Steuervakuums ergibt.

In einer bevorzugten Weiterbildung ist eine Vergleichseinrichtung vorgesehen, welche dazu geeignet ist, Steuer- und Melkvakuum miteinander zu vergleichen. Bei zu geringem Melkvakuum wird der Strömungsquerschnitt derart beeinflusst, dass das Melkvakuum vergrößert wird. Bei zu hohem Melkvakuum wird der Strömungsquerschnitt derart beeinflusst, dass das Melkvakuum verringert wird.

In einer Weiterbildung ist wenigstens eine Sensoreinheit zur Bestimmung des Melkvakuums oder einer zum Vakuum proportionalen Größe, im oder benachbart zu dem wenigstens einen Melkbecher vorgesehen. Die Sensoreinheit ist in dieser Weiterbildung mit einer Vergleichseinrichtung zum Vergleich des aktuellen Melkvakuums oder der proportionalen Größe mit einem vorgegebenen Wert, verbunden. Diese Weiterbildung der erfindungsgemäßen Melkvorrichtung weist des weiteren eine Steuereinheit auf, die einerseits mit der Vergleichseinrichtung und andererseits mit einer Sperreinheit bzw. einer Durchflussventileinheit verbunden ist.

Dadurch, dass wenigstens eine Sensoreinheit vorgesehen ist, welche das Vakuum, das an der Zitze eines zu melkenden Tieres anliegt, erfasst, kann auch eine tierindividuelle Steuerung des Vakuums erzielt werden. Die Änderung des Vakuums erfolgt vorzugsweise kontinuierlich.

In einer besonders bevorzugten Weiterbildung einer oder mehrerer der zuvor beschriebenen Ausgestaltungen der Erfindung ist die Vergleichseinrichtung, die Steuereinrichtung und die Sensoreinrichtung als eine gemeinsame Einrichtung ausgebildet. Beispielsweise erfüllt eine Membraneinrichtung diese Anforderungen bzw. Eigenschaften, wenn die Membrane auf einer Seite mit dem Melkvakuum und auf der anderen Seite mit dem Steuervakuum beaufschlagt wird. Die Membrane wirkt als Sensoreinrichtung. Die Membrane wirkt ebenfalls als Vergleichseinrichtung, da je nach Differenz der anliegenden Vakua die Membrane zu der einen oder anderen Seite ausgelenkt wird. Die Membrane kann dann auch als Steuereinrichtung wirken, wenn die Auslenkung der Membrane eine Querschnittsveränderung bewirkt.

Nach einer vorteilhaften Weiterbildung einer oder mehrerer der zuvor beschriebenen Weiterbildungen der Melkvorrichtung wird vorgeschlagen, dass die Sperreinheit einen lageveränderlichen Körper aufweist, durch den eine Veränderung des Strömungsquerschnittes bewirkt wird.

Bevorzugt ist hierbei eine Ausbildung der Melkvorrichtung, bei der der Körper mit einer auslenkbaren Membrane verbunden ist, die teilweise eine Kammer begrenzt, welche mit dem Steuerdruck durch eine Leitung verbunden ist. Durch diese vorteilhafte Ausgestaltung der Melkvorrichtung werden auch mögliche Undichtigkeiten in den milchführenden Teilen vermieden, da lediglich ein zentraler Bereich der Membrane, an dem der Körper befestigt ist, bewegt wird. Dies hat auch den Vorteil, dass mögliche Kontaminationen des Systems vermieden werden. Die Reinigung, welche einen bedeutenden Aspekt der Hygiene im Bereich der Melkvorrichtungen bildet, kann einfach und effizient durchgeführt werden.

Gemäß einer weiteren vorteilhaften Ausgestaltung der Melkvorrichtung wird vorgeschlagen, dass der Körper mit einer Antriebseinheit und diese mit der Steuereinheit verbunden ist. Bevorzugt ist hierbei eine Ausbildung der Antriebseinheit, bei der es sich um eine elektromotorische Antriebseinheit handelt. Alternativ kann die Antriebseinheit auch eine elektromagnetische Antriebseinheit sein.

Nach einer weiteren vorteilhaften Weiterbildung der Melkvorrichtung wird vorgeschlagen, dass die Sperreinheit bzw. Durchflussventileinheit ein Gehäuse hat, das wenigstens einen Anschluss aufweist, der mit dem Steuervakuum über eine Leitung verbunden ist. Im Gehäuse ist eine elastische schlauchförmige Sperreinheit vorgesehen, die einen Abschnitt des Milchschlauchs bildet. Zwischen dem Gehäuse und der Sperreinheit ist eine Kammer ausgebildet, in die der Anschluss mündet.

Der Vorteil dieser Ausgestaltung der erfindungsgemäßen Melkvorrichtung kann darin gesehen werden, dass lediglich durch Veränderung des Querschnittes der Sperreinheit bzw. Durchflussventileinheit das Vakuum an der Zitze stabilisiert werden kann, ohne dass zusätzliche Elemente vorgesehen sind, die in den Strömungsquerschnitt des Melkschlauchs eingreifen. Durch Beaufschlagung der Kammer mit dem Steuerdruck wird automatisch ein entsprechendes Melkvakuum eingestellt, welches dann im wesentlichen nicht von dem aktuellen Milchfluss abhängt.

Nach einer noch weiteren vorteilhaften Ausgestaltung der Melkvorrichtung wird vorgeschlagen, dass in der Leitung, durch die eine Kammer der Sperreinheit mit wenigstens einer Druckquelle verbunden wird, eine Ventileinheit vorgesehen ist, die durch eine Steuereinheit ansteuerbar ist.

Bei der Sensoreinheit handelt es sich vorzugsweise um einen P/E-Wandler. Bei dem Wandler handelt es sich um einen solchen Wandler, der den im Melkschlauch anliegenden Druck bzw. das im Melkschlauch herrschende Vakuum in elektrische Signale umwandelt. Diese Signale werden in die Vergleichseinrichtung geleitet, in der entsprechend dem Informationsgehalt des Signals ein Vergleich mit vorgegebenen Werten stattfindet.

Nach einer vorteilhaften Weiterbildung umfasst die Sensoreinrichtung wenigstens einen Schalter, wobei der Schalter beim Überschreiten eines vorgegebenen Vakuums selbsttätig aus einer Ruhelage in eine Aktivlage über und in diese zurückgeht und in der Aktivlage ein Signal an die Steuereinheit abgibt. Bevorzugt ist hierbei die Gestaltung der Sensoreinheit, bei der die Sensoreinheit ein Schaltelement aufweist, das mit einer auslenkbaren Membrane verbunden ist, die eine Trennwand zwischen dem Vakuum im Melkschlauch und einem vorgegebenen Vakuum in einer Kammer bildet. Auch hierdurch wird eine physikalische Trennung zwischen dem milchführenden Teil und den Vakuumteilen erreicht.

Insgesamt sind insbesondere die Ausgestaltungen besonders bevorzugt, bei denen kein separater Drucksensor zur Druckmessung benötigt wird, um das Melkvakuum einzustellen. Besonders bevorzugt sind die Ausgestaltungen, bei denen eine automatische Einstellung des Melkvakuums in Abhängigkeit von dem Steuervakuum erfolgt.

Erfindungsgemäß wird eine Vorrichtung und ein Verfahren zum automatisierten Melken zur Verfügung gestellt. Dazu wird ein Melkzeug verwendet, bei dem mit Hilfe eines langen oder auch kurzen Milchschlauches die ermolkene Milch einem Sammelstück zugeleitet werden kann. Während der Entlastungsphase legt sich das Zitzengummi wenigstens teilweise an die Zitze an. Beim Melken ist die Verwendung eines Milchschlauches mit einem großen Innendurchmesser möglich, da der Strömungsquerschnitt des Milchleitungssystems an wenigstens einer vorbestimmten Stelle in Abhängigkeit von einem Steuerdruck veränderbar ist. Der Steuerdruck dient zur Steuerung des Melkvakuums, das an der Zitze anliegt. Im Unterschied zu bekannten Verfahren und Vorrichtungen wird hier nicht in Abhängigkeit von dem Milchfluss gesteuert, sondern das Melkvakuum immer an das Steuervakuum angepasst.

Weitere Einzelheiten und Vorteile der erfindungsgemäßen Vorrichtung werden anhand der in der Zeichnung dargestellten Ausführungsbeispiele erläutert, ohne dass der Gegenstand der Erfindung auf diese beschränkt ist.

Es zeigen:
- Fig. 1: Schematisch ein erstes Ausführungsbeispiel einer Melkvorrichtung,
- Fig. 2: schematisch ein zweites Ausführungsbeispiel einer Melkvorrichtung mit einer Schlauchabsperreinheit im Schnitt,
- Fig. 3: ein drittes Ausführungsbeispiel einer Melkvorrichtung einer Sperreinheit im Schnitt,
- Fig. 4: ein weiteres Ausführungsbeispiel einer Sperreinheit im Vollschnitt,
- Fig. 5: im Schnitt eine am Sammelstück angeordnete Sensoreinheit und
- Fig. 6: zeigt ein weiteres Ausführungsbeispiel einer Vorrichtung zur Steuerung eines Melkvakuums an einer Zitze.
- Fig. 7: zeigt ein weiteres Ausführungsbeispiel einer Vorrichtung zur Steuerung eines Melkvakuums an einer Zitze.

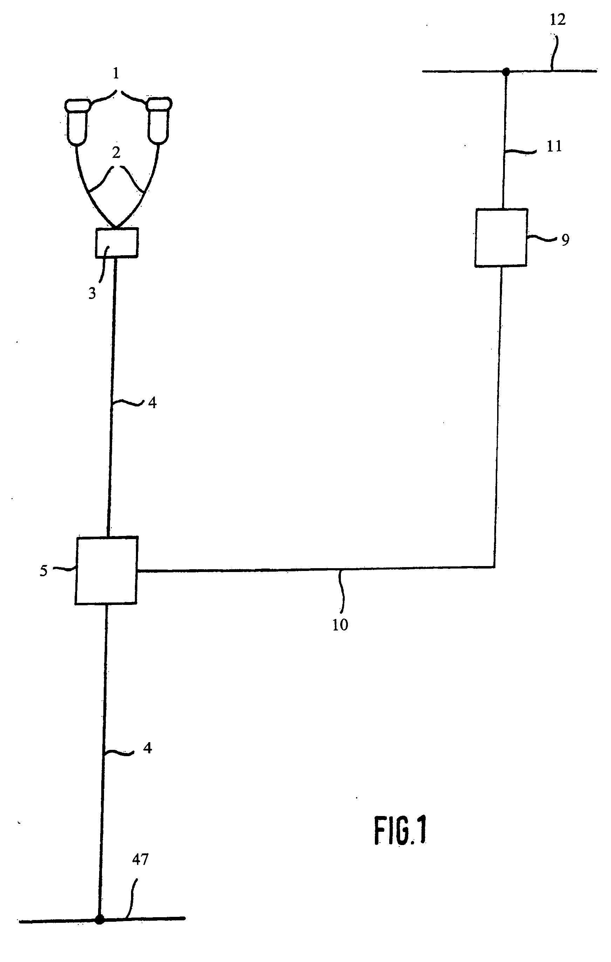

Figur 1 zeigt ein erstes Ausführungsbeispiel einer Melkvorrichtung. Die Melkvorrichtung weist Melkbecher 1 auf, die über kurze Melkschläuche 2 mit einem Sammelstück 3 verbunden sind. Der Ausgang des Sammelstücks 3 ist über einen Melkschlauch 4 mit einer Melkleitung 47 verbunden.

Innerhalb des Melkschlauchs 4 ist eine Durchflussventileinheit bzw. Sperreinheit 5 angeordnet. Durch die Sperreinheit 5 wird eine örtliche Veränderung des Strömungsquerschnittes innerhalb des Melkschlauchs 4 bewirkt. Sperreinheiten 5 können auch in den kurzen Milchschläuchen 2 vorgesehen sein, um z.B. ein viertelindividuelles Melken zu ermöglichen.

Innerhalb der Vergleichseinrichtung erfolgt ein Vergleich des Melkvakuums oder der proportionalen Kenngröße mit einem vorgegebenen Steuervakuum. In Abhängigkeit des Vergleichsergebnisses von aktuellem Melkvakuum und vorgegebenem Steuervakuum wird der Druckabfall an der Sperreinheit 5 eingestellt, um das Melkvakuum auf den gewünschten Wert einzustellen.

Das Steuervakuum wird in einer Steuerdruckeinstelleinheit 90 eingestellt. Dazu werden z.B. Düsen gemäß Vorgabe geöffnet; um den angestrebten Vakuumwert einzustellen. Grundsätzlich ist es dabei bevorzugt, dass das Steuervakuum aus dem Betriebsvakuum generiert wird. Die Höhe des Steuervakuums kann auch tierindividuell einstellbar sein. Ebenso ist auch eine Einstellbarkeit für die einzelnen Viertel oder eine Variation des Steuervakuums über der Melkdauer möglich.

Die Steuerdruckeinstelleinheit 90 kann eine Ventileinheit und z.B. eine Ausgleichseinheit umfassen, wobei die Ventileinheit durch Impulse oder dergleichen derart angesteuert wird, dass sich die gewünschte Vakuumhöhe einstellt. Die eventuell vorhandene Ausgleichseinheit glättet dann den zeitlichen Verlauf des Vakuums, so dass der eingestellte Steuerdruck resultiert.

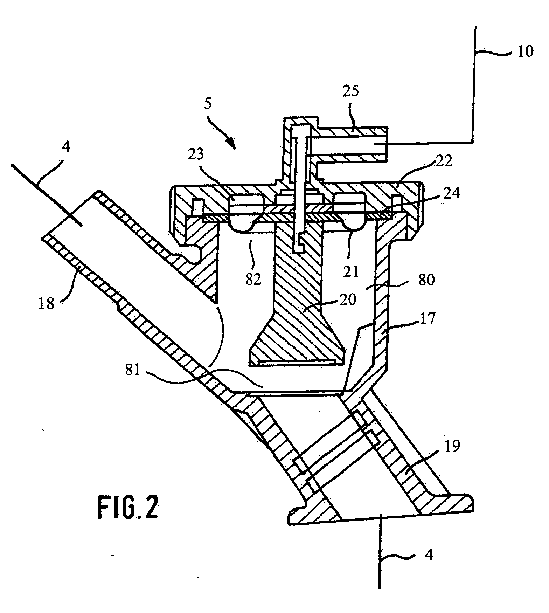

In der Figur 2 ist schematisch ein zweites Ausführungsbeispiel einer Melkvorrichtung dargestellt, wobei die Sperreinheit bzw. die Durchflussventileinheit im Schnitt dargestellt ist.

Die Sperreinheit 5 weist ein Gehäuse 17 auf. Das Gehäuse 17 hat zwei Anschlussstutzen 18, 19, die mit dem Melkschlauch 4 verbunden sind. Der Innenraum des Gehäuses 17 ist über eine Membrane 21 und einen Deckel 22 mittels einer Schraubverbindung gegenüber der Atmosphäre abschließbar. Zwischen einer Stirnfläche des Gehäuses 17 und dem Deckel 22 ist ein Rand 24 einer Membrane 21 eingeklemmt, so dass die Membrane 21 fixiert ist. Die Membrane 21 sowie der Deckel 22 begrenzen eine Kammer 23. Der Deckel 22 weist einen Anschluss 25 auf, der mit der Leitung 10 verbunden ist. Der Anschluss 25 mündet in die Kammer 23.

Mit der Membrane 21 ist ein Körper 20 verbunden, der durch die Membrane 21 lageveränderlich ist. In Abhängigkeit von der Lage des Körpers 20 wird eine Veränderung des Strömungsquerschnittes im Melkschlauch 4 bewirkt.

In dem dargestellten Ausführungsbeispiel nach Figur 2 wird der Steuerdruck bzw. das Steuervakuum in der Steuerdruckeinstelleinheit 90 generiert.

Während des Melkvorgangs liegt an der Membrane 21 in der Kammer 23 das Steuervakuum an, während in der Kammer 80 im wesentlichen das Melkvakuum anliegt. Die resultierende Kraft auf die Membrane 21 und somit den Körper 20 ergibt sich aus den Flächenverhältnissen 81,82 und den Vakuumhöhen von Steuerund Melkvakuum.

Ein zu geringes Melkvakuum bewirkt eine weitere Öffnung des freien Strömungsquerschnittes 81, während ein zu großes Melkvakuum eine Querschnittsverringerung bewirkt, um so das Melkvakuum an das Steuervakuum anzupassen.

Eine Druckdifferenz an der Membrane 21 führt dazu, dass die Membrane 21 mit dem Körper 20 in radialer Richtung des Melkschlauchs 4 ausgelenkt wird. Der Köper 20 verringert oder vergrößert den Strömungsquerschnitt im Melkschlauch 4 so lange, bis das Vakuum an der Zitze die gewünschte Vakuum-Höhe hat.

Ist die Höhe des vorgegebenen Melkvakuums unterschritten, so Wird die Membrane 21 aus einer ausgelenkten Position in eine Normal-Position bewegt, so dass der Körper 20 den Strömungsquerschnitt freigibt, bis das Melkvakuum an der Zitze die gewünschte Vakuum-Höhe hat. Zur Anpassung an gewünschte Eigenschaften (Reaktionsgeschwindigkeit, Druckverhältnisse) können die Strömungsverhältnisse wunschgemäß angepasst werden. Dazu können auch die Flächenverhältnisse der Strömungsöffnung 81 und der freien Membranfläche 82 angepasst werden.

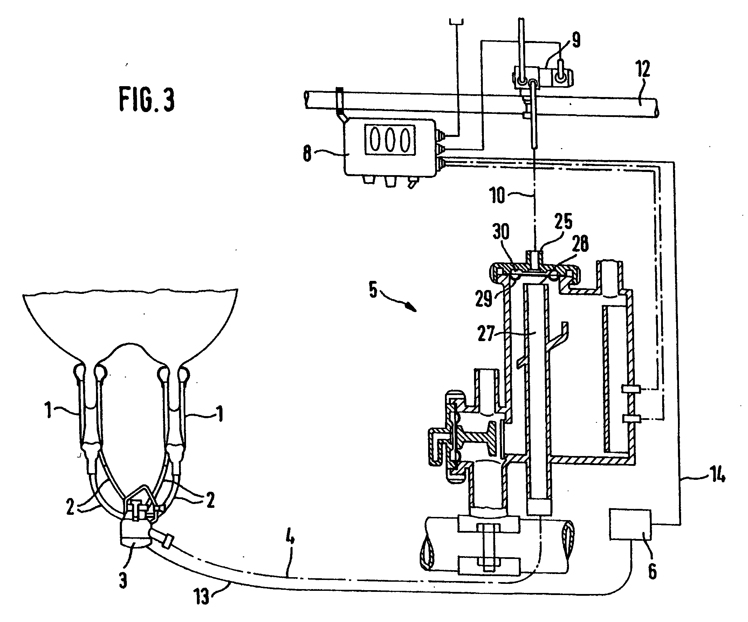

Fig. 3 zeigt ein weiteres Ausführungsbeispiel einer erfindungsgemäßen Melkvorrichtung. Der prinzipielle Aufbau der in der Figur 3 dargestellten Ausführungsform der erfindungsgemäßen Melkvorrichtung entspricht im wesentlichen dem Aufbau der in der Figur 1 dargestellten Ausführungsform der Melkvorrichtung. Zur Vermeidung von Wiederholungen wird daher auf die Erläuterung der Figur 1 verwiesen.

Die in der Figur 3 dargestellte Sperreinheit 5 der Melkvorrichtung weist ein im wesentlichen vertikal angeordnetes Rohr 27 auf, welches mit dem Melkschlauch 4 verbunden ist. Das Rohr 27 weist eine Stirnfläche 28 auf. Mit Abstand zu der Stirnfläche 28 ist ein lageveränderlicher Körper 29, z.B. Membrane, vorgesehen. Der Körper 29 ist in Richtung der Stirnfläche 28 hin von dieser weg bewegbar, so dass der Abstand zwischen der Stirnfläche 28 und dem Körper 29 veränderlich ist. Durch die Veränderung des Abstandes wird eine Veränderung des Strömungsquerschnittes erreicht.

Zur Bewegung des Körpers 29 ist dieser elastisch ausgebildet. Bei dem Körper 29 kann es sich auch um einen Faltenbalg handeln. Der Körper 29 begrenzt teilweise eine Kammer 30, in die ein Anschluss 25 mündet. Mit dem Anschluss 25 ist die Leitung 10 verbunden, in der das Steuervakuum eingestellt ist.

In Abhängigkeit von dem Steuervakuum und dem Melkvakuum an einer Zitze wird eine vertikale Bewegung des Körpers 29 bewirkt, so dass sich der Abstand zwischen der Stirnfläche 28 und dem Körper 29 verändert. Dieser Vorgang wird so lange durchgeführt, bis das gewünschte Melkvakuum an der Zitze erreicht wird.

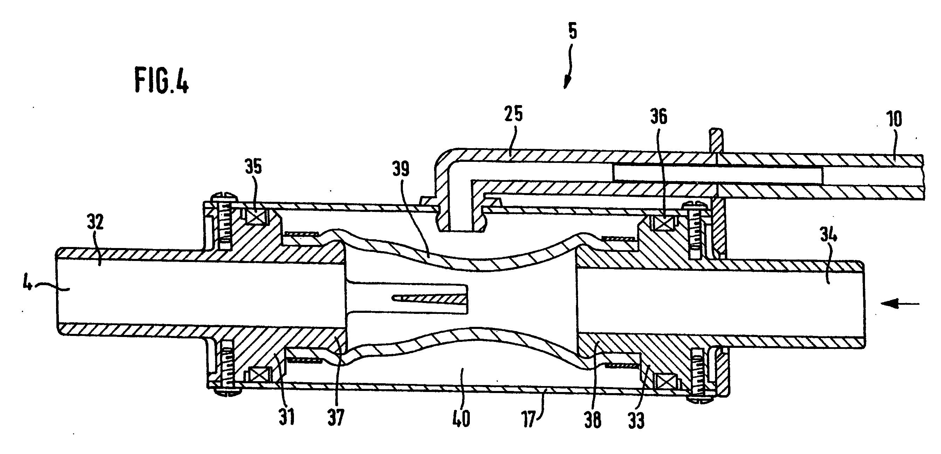

In der Figur 4 ist ein Ausführungsbeispiel einer Sperreinheit 5 dargestellt. Die Sperreinheit 5 weist ein Gehäuse 17 auf. Das Gehäuse 17 ist im wesentlichen zylinderförmig ausgebildet. Das Gehäuse 17 ist über einen Kragen 31 mit einem Eingangsstutzen 32 verbunden. Das Gehäuse 17 ist des weiteren über einen Kragen 33 mit einem Ausgangsstutzen 34 verbunden. Der Eingangsstutzen 32 und der Ausgangsstutzen 34 sind über jeweils ein Dichtungselement 35, 36 gasdicht gegenüber der Wandung des Gehäuses 17 abgedichtet. Der Eingangsstutzen 32 und der Ausgangsstutzen 34 sind mit Abstand zueinander angeordnet. Die einander zugewandten Endbereiche des Eingangsstutzens 32 und des Ausgangsstutzens 34 bilden Befestigungsabschnitte 37, 38. An den Befestigungsabschnitten 37, 38 ist eine im wesentlichen schlauchförmig ausgebildete elastische Sperreinheit 39 angeordnet.

Zwischen einem Außenmantel der Sperreinheit 39 und dem Gehäuse 17 ist eine Kammer 40 ausgebildet. Die Kammer 40 weist einen Anschluss 25 auf, der mit einer Leitung 10 verbunden ist.

Die Sperreinheit 39 ist derart ausgebildet, dass sie aufgrund einer Druckdifferenz in der Kammer 40 und dem in der Sperreinheit 34 herrschenden Druck verformbar ist. Herrscht in der Kammer 40 ein geringerer Unterdruck als in der Sperreinheit 39, so kommt es zu einer Kontraktion der Sperreinheit 39, wodurch der Strömungsquerschnitt im Melkschlauch 4 verringert wird.

Auf die Kammer 40 wird das Steuervakuum aufgebracht. Im Inneren herrscht im wesentlichen das Melkvakuum. Die Differenz bewirkt ein Vergrößerung oder Verkleinerung des freien Strömungsquerschnittes.

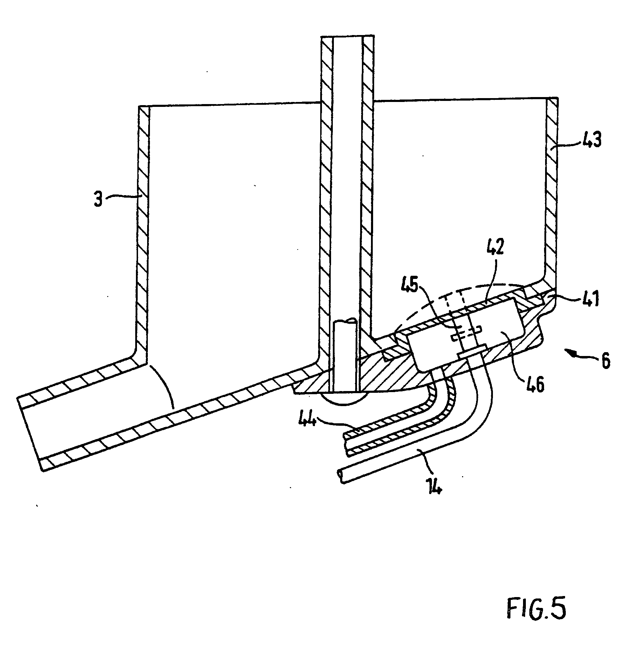

Figur 5 zeigt ein Ausführungsbeispiel einer Sensoreinheit 6. Die Sensoreinheit 6 ist an einem Milchsammelstück 3 angeordnet. Das Milchsammelstück 3 weist ein Gehäuse 43 mit einer Aussparung auf. In der Aussparung ist eine Membrane 42 angeordnet. Die Membrane 42 ist über ein Gehäuseteil 41 an der Wandung des Gehäuses 43 des Milchsammelstücks 3 festgelegt. Das Gehäuseteil 41 und die Membrane 42 begrenzen eine Kammer 46. Innerhalb der Kammer 46 ist ein Schaltelement 45 angeordnet, das mit der auslenkbaren Membrane 42 verbunden ist. Das Schaltelement 45 ist über eine Signalleitung 14 mit der nicht dargestellten Vergleichseinrichtung bzw. mit einer Steuereinrichtung verbunden. Durch die Leitung 44 kann ein vorgegebenes Steuervakuum in der Kammer 46 eingestellt werden.

In dem dargestellten Ausführungsbeispiel nach Figur 5 befindet sich das Schaltelement in einer Ruhelage. Herrscht in dem Sammelstück 3 ein Melkvakuum, welches größer ist als das Steuervakuum in der Kammer 46, so wird die Membrane 42 in Richtung des Sammelstücks 3 ausgelenkt. Es nimmt eine Aktivlage ein, die in der Figur 5 gestrichelt dargestellt ist. Das Schaltelement 45 ist mit der Membrane 42 verbunden, so dass durch die Lageveränderung der Membrane 42 das Schaltelement 45 ein Signal an die Steuereinheit 8 über die Signalleitung 14 liefert.

Ist der Strömungsquerschnitt des Melkschlauchs soweit begrenzt worden, dass die Höhe des Vakuums abnimmt, so geht die Membrane 42 aus ihrer Aktivlage in ihre Ruhelage zurück. Bei dem Schaltelement kann es sich beispielsweise um einen Hall-Sensor handeln. Das Schaltelement kann ein kapazitives oder auch ein induktives Schaltelement sein. Es kann auch ein bistabiles Schaltelement sein, das lediglich zwei Zustände, die Ruhelage und eine Aktivlage kennt.

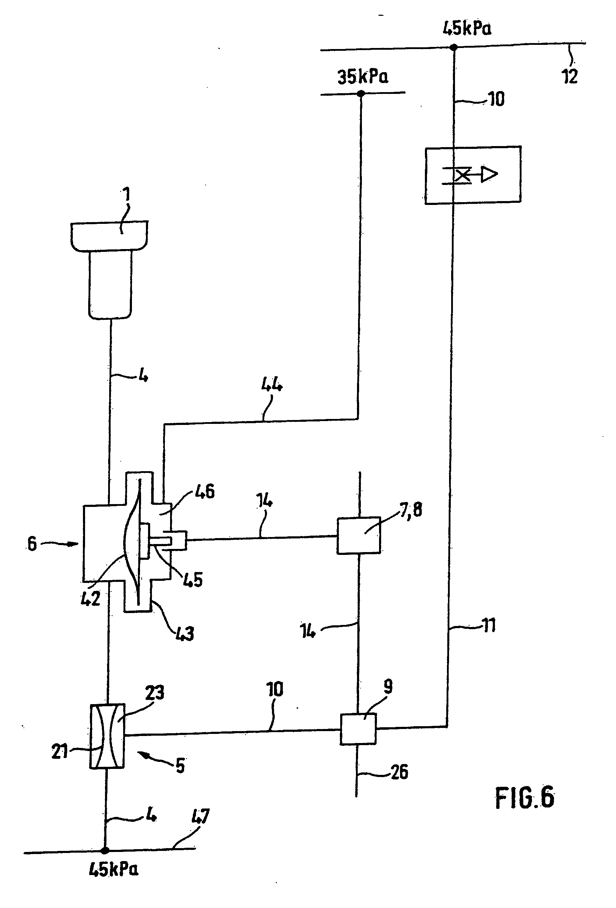

Figur 6 zeigt ein weiteres Ausführungsbeispiel einer Vorrichtung zur Stabilisierung eines Melkvakuums an einer Zitze eines zu melkenden Tieres. Repräsentativ ist ein Melkbecher 1 dargestellt, der über einen Melkschlauch 4 mit einer Melkleitung 47 verbunden ist.

In dem Melkschlauch 4 ist eine Sensoreinheit 6 angeordnet. Die Sensoreinheit 6 weist eine flexible Membrane 42 innerhalb eines Gehäuses 43 auf. Die Membrane 43 unterteilt die Sensoreinheit 6 in einen Durchgangsraum, durch den die Milch hindurchfließt, und in eine Kammer 46. Die Kammer 46 ist über eine Leitung 44 mit einer Druckquelle verbunden. In dem dargestellten Ausführungsbeispiel liegt in der Kammer 46 über die Leitung 44 ein Druck von ca. 35 kPa an.

Die Membrane 42 ist mit einem Schaltelement 45 verbunden. Dieses Schaltelement ist über eine Signalleitung 14 mit einer Vergleichseinrichtung 7 und Steuereinheit 8 verbunden. Über eine weitere Signalleitung ist die Vergleichseinrichtung 7 und Steuereinheit 8 mit einer Ventileinheit 9 verbunden.

In Strömungsrichtung betrachtet ist der Sensoreinheit 6 ein Durchflussventil bzw. eine Sperreinheit 5 nachgeordnet. Bei dem Durchflussventil 5 kann es sich beispielsweise um die in der Figur 2 näher erläuterte Durchflussventil oder um eine vergleichbar wirkende Durchflussventil handeln. Die Durchflussventil weist zumindest eine Membrane 21 auf. Durch die Membrane 21 wird der Strömungsquerschnitt, in dem die zu melkende Milch geführt wird, geändert. Hierzu weist das Durchflussventil 5 eine Kammer 23 auf, die über eine Leitung 10 mit der Ventileinheit 9 verbunden ist. Die Ventileinheit 9 ist des weiteren über eine Leitung 11 mit einer Druckquelle 12 verbunden. Die Druckquelle 12 liefert einen (Unter-)Druck von ca. 45 kPa. Dieser Druck herrscht auch in der Melkleitung 47.

In Abhängigkeit von der Stellung der Membrane 42 in der Sensoreinheit 6 wird das Schaltelement 45 betätigt, so dass die Vergleichseinrichtung 7 und die Steuereinheit 8 durch ein entsprechendes Signal aktiviert werden. Diese liefern Signale an die Ventileinheit 9, durch die der Druck in der Kammer 23 verändert wird. Mit der Veränderung des Druckes in der Kammer 23 geht eine Veränderung des Strömungsquerschnittes einher.

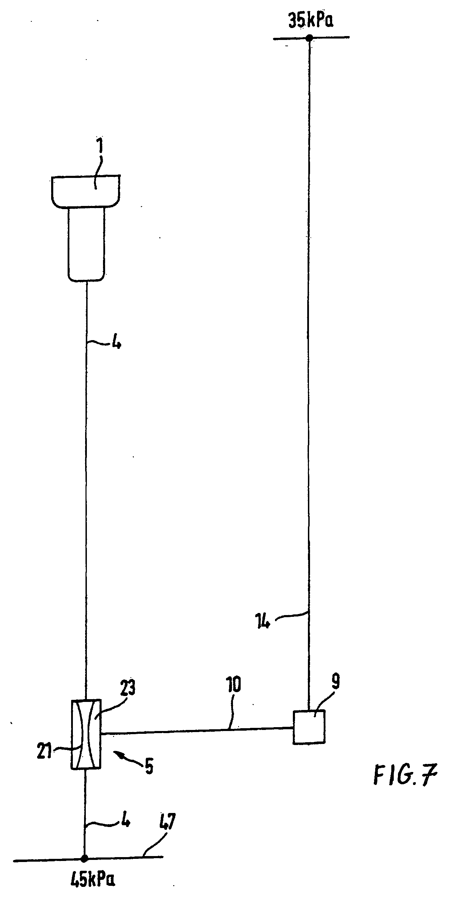

Figur 7 zeigt ein weiteres Ausführungsbeispiel einer Vorrichtung zur Stabilisierung eines Melkvakuums an einer Zitze eines zu melkenden Tieres. Der Aufbau ähnelt dem in Figur 6 dargestellten.

Im Unterschied zum Aufbau nach Figur 6, wird bei dem in Figur 7 dargestellten Ausführungsbeispiel kein Drucksensor und auch keine elektrische Steuer- und Vergleichseinrichtung benötigt. Es handelt sich hier um eine sehr einfache Lösung, die rein mechanisch funktioniert. Über die Elastizität der Membrane 21 ist das Steuerverhalten des Sperrventils bzw. des Durchflussventils 5 veränderbar. Dazu können nicht nur die Materialeigenschaften (Dicke, Material etc.) der Membrane 21 an das gewünschte Ergebnis angepasst werden, sondern auch die Spannung kann entsprechend variiert werden.

Das Steuervakuum von 35 kPa wird über die Leitung 10 auf die Kammer 23 des Absperrventils 5 gelegt. Je nach Höhe des Melkvakuums wirkt auf die Membrane 21 im Durchflussventil eine Kraft, die ein Öffnen oder Schließen des Durchflussventils bewirkt.

### Bezugszeichenliste

- 1: Melkbecher
- 2: kurzer Melkschlauch
- 3: Sammelstück
- 4: Melkschlauch
- 5: Sperreinheit
- 6: Sensoreinheit
- 7: Vergleichseinrichtung
- 8: Steuereinheit
- 9: Ventileinheit
- 10: Leitung
- 11: Leitung
- 12: Druckquelle
- 13: Leitung
- 14: Signalleitung
- 15: Signalleitung
- 16: Steuerleitung
- 17: Gehäuse
- 18: Anschlussstutzen
- 19: Anschlussstutzen
- 20: Körper
- 21: Membrane
- 22: Deckel
- 23: Kammer
- 24: Rand
- 25: Anschluss
- 26: Leitung
- 27: Rohr
- 28: Stirnfläche
- 29: Körper
- 30: Kammer
- 31: Kragen
- 32: Eingangsstutzen
- 33: Kragen
- 34: Ausgangsstutzen
- 35: Dichtungselement
- 36: Dichtungselement
- 37: Befestigungsabschnitt
- 38: Befestigungsabschnitt
- 39: Absperreinheit
- 40: Kammer
- 41: Gehäuseteil
- 42: Membrane
- 43: Gehäuse
- 44: Leitung
- 45: Schaltelement
- 46: Kammer
- 47: Melkleitung
- 80: Kammer
- 81: Austrittsöffnung
- 82: Membranfläche
- 90: Steuerdruckeinstelleinheit

## Patentansprüche

1. Verfahren zur Verbesserung eines an einer sich im Melkbecher (1) befindenden Zitze anliegenden Vakuums, wobei der Melkbecher (1) über einen Melkschlauch (4) mit mindestens einer Milchleitung (47) verbunden ist, **gekennzeichnet durch** folgende Schritte:
a) Bestimmen des Melkvakuums;
b) Vergleichen des aktuellen Melkvakuums mit einem vorgegebenen Steuervakuum mit einer Vergleichseinrichtung;
c) örtliches Verändern des freien Strömungsquerschnittes des Melkschlauchs (4) in Abhängigkeit vom Ergebnis des Vergleichs.

2. Verfahren nach Anspruch 1, bei dem das Vergleichen des aktuellen Melkvakuums mit dem vorgegebenen Steuervakuum mit einer flexiblen Membraneinrichtung durchgeführt wird..

3. Verfahren nach Anspruch 1 oder 2, bei dem der Unterschied zwischen aktuellem Melkvakuum und vorgegebenen Steuervakuum eine Steuerkraft auf die flexible Membraneinrichtung bewirkt.

4. Verfahren nach einem der vorhergehenden Ansprüche, bei dem die Bestimmung des Melkvakuums oder einer zum Vakuum proportionalen Kenngröße kontinuierlich oder diskontinuierlich erfolgt.

5. Verfahren nach einem der vorhergehenden Ansprüche, bei dem der freie Strömungsquerschnitt bei dem vorgegebenen Steuervakuum im Melkbecher (1) einen vorgegebenen Strömungsquerschnitt hat und der Strömungsquerschnitt in Abhängigkeit vom Ergebnis des Vergleichs verkleinert wird.

6. Verfahren nach einem der vorhergehenden Ansprüche, bei dem eine im wesentlichen radial einwärts gerichtete Kraft auf einen elastischen Abschnitt (39) des Melkschlauchs (4) einwirkt, wobei die Größe der Kraft vom Ergebnis des Vergleichs abhängig ist.

7. Verfahren nach Anspruch 6, bei dem der Abschnitt von einem Gehäuse (17) umgeben ist, wobei zwischen dem Gehäuse (17) und dem Abschnitt (39) eine Kammer (40) ausgebildet ist, die mit dem Steuervakuum beaufschlagt wird.

8. Verfahren nach einem der vorhergehenden Ansprüche, bei dem der freie Strömungsquerschnitt durch einen lageveränderlichen Körper (20), der wenigstens teilweise in dem Melkschlauch (4) angeordnet ist, verändert wird.

9. Verfahren nach Anspruch 8, bei dem der Körper (20) im wesentlichen radial ein- oder auswärts bewegt wird.

10. Verfahren nach Anspruch 8, bei dem der Körper um eine in der Ebene des freien Strömungsquerschnittes liegende Achse verschwenkt wird.

11. Verfahren nach mindestens einem der Ansprüche 8 bis 10, bei dem der Körper (20) durch eine Antriebseinheit betätigt wird.

12. Verfahren nach Anspruch 11, bei dem der Körper (20) mit einer auslenkbaren Membrane (21) verbunden ist, die teilweise eine Kammer (23) begrenzt, wobei die Kammer mit einem Druck beaufschlagt wird, dessen Höhe vom Ergebnis des Vergleichs abhängig ist.

13. Melkvorrichtung mit wenigstens einem Melkbecher (1), der durch einen Melkschlauch (4) mit einer Milchleitung (47) verbunden ist, **gekennzeichnet durch**
- wenigstens eine Sensoreinheit (6) zur Bestimmung des Melkvakuums
- eine mit der Sensoreinheit (6) verbundene Vergleichseinrichtung (7) zum Vergleich des aktuellen Melkvakuums mit einem vorgegebenen Steuervakuum,
- eine mit der Vergleichseinrichtung (7) verbundene Steuereinheit (8) und
- eine mit der Steuereinheit (8) verbundene Sperreinheit (5), **durch** die das an einer sich im Melkbecher (1) befindenden Zitze anliegende Vakuum eine örtliche Veränderung des Strömungsquerschnittes des Melkschlauchs (4) bewirkt.

14. Melkvorrichtung nach Anspruch 13, **dadurch gekennzeichnet, dass** die Sperreinheit (5) einen lageveränderlichen Körper (20, 39) aufweist, durch den eine Veränderung des Strömungsquerschnittes bewirkt wird.

15. Melkvorrichtung nach Anspruch 12, **dadurch gekennzeichnet, dass** der Körper (20) im wesentlichen in radialer Richtung des Melkschlauchs (4) beweglich ist.

16. Melkvorrichtung nach Anspruch 14, **dadurch gekennzeichnet, dass** der Körper um eine in der Ebene des freien Strömungsquerschnittes liegende Achse verschwenkbar ist.

17. Melkvorrichtung nach Anspruch 14 oder 15, **dadurch gekennzeichnet, dass** der Körper (20) mit einer auslenkbaren Membrane (21) verbunden ist, die teilweise eine Kammer (23) begrenzt, die mit dem Steuervakuum durch eine Leitung (10, 11) verbunden ist.

18. Melkvorrichtung nach Anspruch 14, 15 oder 16, **dadurch gekennzeichnet, dass** der Körper (20) mit einer Antriebseinheit und diese mit der Steuereinheit verbunden ist.

19. Melkvorrichtung nach Anspruch 18, **dadurch gekennzeichnet, dass** die Antriebseinheit eine elektromotorische Antriebseinheit ist.

20. Melkvorrichtung nach Anspruch 13, **dadurch gekennzeichnet, dass** die Sperreinheit (5) ein Gehäuse (17), das wenigstens einen Anschluss (25), der mit dem Steuervakuum über eine Leitung verbunden ist, aufweist, dass im Gehäuse (17) eine elastische schlauchförmige Sperreinheit (39), die einen Abschnitt des Milchschlauchs (4) bildet, vorgesehen ist und mit einer zwischen dem Gehäuse (17) und der Sperreinheit (39) ausgebildeten Kammer (40), in die der Anschluss (9) mündet.

21. Melkvorrichtung nach einem der Ansprüche 17 bis 20, **dadurch gekennzeichnet, dass** in der Leitung (10) eine Ventileinheit (9) angeordnet ist, die durch die Steuereinheit (8) ansteuerbar ist.

22. Melkvorrichtung nach einem der Ansprüche 13 bis 21, **dadurch gekennzeichnet, dass** die Sensoreinheit (6) durch einen P/E-Wandler gebildet ist.

23. Melkvorrichtung nach einem der Ansprüche 13 bis 22, **dadurch gekennzeichnet, dass** die Sensoreinheit (6) in Form eines Schalters gebildet ist, wobei der Schalter beim Überschreiten des vorgegebenen Steuervakuums selbsttätig aus einer Ruhelage in eine Aktivlage über- und zurückgeht und in der Aktivlage ein Signal an die Vergleichseinheit (7) oder die Steuereinheit (8) abgibt.

24. Melkvorrichtung nach Anspruch 23, **dadurch gekennzeichnet, dass** die Sensoreinheit (6) wenigstens ein mit der Steuereinheit (8) verbundenes Schaltelement (45) aufweist, das mit einer auslenkbaren Membrane (42) verbunden ist, die eine Trennwand zwischen dem Vakuum im Melkschlauch (4) und einem vorgegebenen Vakuum in einer Kammer (42) hat.
